# EUROPÄISCHE PATENTSCHRIFT

(11) **EP 2 333 330 B1**
(45) Veröffentlichungstag und Bekanntmachung des Hinweises auf die Patenterteilung: **18.01.2017**
(21) Anmeldenummer: 10010007.2
(22) Anmeldetag: 21.09.2010
(51) Int. Cl.: F03D 15/00, F16D 7/02, F16D 43/286, F16D 43/21, F16D 48/06

(54) **Windturbine mit Kupplung mit Überlasteinheit und Verfahren**
Wind turbine with coupling with overload clutch and method
Éolienne avec embrayage avec protection contre surcharge et procédé

(30) Priorität: 10.12.2009 DE 102009057761
(43) Veröffentlichungstag der Anmeldung: 15.06.2011
(73) Patentinhaber: Centa-Antriebe Kirschey GmbH, 42781 Haan (DE)
(72) Erfinder: Exner, Jochen, 53773 Hennef (DE); Schulze, Hans Ullrich, 04736 Waldheim (DE)
(74) Vertreter: Roche, von Westernhagen & Ehresmann

(56) Entgegenhaltungen:
- EP-A2- 1 681 496
- WO-A1-2005/064187
- DE-A1- 3 824 372
- DE-A1-102007 003 867
- DE-U1-202004 007 989
- GB-A- 170 692
- US-A- 3 420 344
- US-A- 4 903 804
- US-A- 5 030 942
- US-A- 5 330 039
- US-A- 6 047 800
- US-A1- 2004 159 520
- US-A1- 2005 170 933
- US-A1- 2008 194 382

## Beschreibung

Die Erfindung betrifft zunächst eine Windkraftanlage mit einer Wellenkupplung, mit einer Überlasteinheit in Form einer Rutschkupplung, deren antriebsseitiges Koppelteil mit dem abtriebsseitigen Koppelteil reibschlüssig verbunden ist, und deren Sollgrenzdrehmoment, bis zu welchem eine Kraftübertragung von Antrieb zu Abtrieb stattfindet, einstellbar ist, und mit einem Spannelement, welches das an- und abtriebsseitige Koppelelement unter Definition eines überlastabwerfenden Grenzdrehmomentes gegeneinander presst, wobei der Reibschluss, der das Grenzdrehmoment zwischen den Koppelteilen beeinflusst, im Zeitverlauf Änderungen unterliegt, wobei eine Messeinrichtung das Betriebsdrehmoment erfasst, wobei das Spannelement im Maschinenbetrieb regulierbar ist und wobei eine Regeleinheit vorgesehen ist, welche mittels Regulierung der vom Spannelement auf die Koppelteile aufgebrachten Kraft oder des vom Spannelement auf die Koppelteile aufgebrachten Drucks im laufenden Betrieb ein im wesentlichen konstantes, dem Sollgrenzdrehmoment entsprechendes Grenzdrehmoment zwischen den Koppelteilen gewährleistet.

Zudem betrifft die Erfindung ein Verfahren zum Betreiben einer Windkraftanlage nach Anspruch 1 umfassend ein Verfahren zur Einstellung des Grenzdrehmomentes der Überlasteinheit einer Rutschkupplung, gekennzeichnet durch die folgenden Verfahrensschritte:a) Erfassen des Betriebsdrehmomentes und der Eingangsdrehzahl durch eine Messeinrichtung, b) Erfassen des Reibschlusses in der Überlasteinheit durch eine Messeinrichtung,c) Vergleich des Betriebsdrehmoments mit dem Sollgrenzdrehmoment,entweder d) Absenken des tatsächlichen Grenzdrehmoments auf das Sollgrenzdrehmoment durch eine Regeleinheit bei Betriebsdrehmoment größer Sollgrenzdrehmoment,oder e) Erhöhen des tatsächlichen Grenzdrehmoments bei Schlupf in der Überlasteinheit durch eine Regeleinheit bis zum Erreichen eines schlupffreien Betriebes oder bis Erreichen des Sollgrenzdrehmoments.

Kupplungen sind beispielsweise in Windkraftanlagen eingesetzt, wobei die Überlasteinheit in der Regel als Rutschkupplung ausgebildet ist. Die Rutschkupplung stellt sicher, dass der Antriebsstrang, welcher das vom Rotor erzeugte Drehmoment zum Generator überträgt, nicht über sein Nenndrehmoment hinaus belastet wird. Solche Überlastsituationen können beispielsweise durch lasterhöhende Rückkopplungen aus dem Elektrizitätsnetz oder durch einen elektrischen Kurzschluss im Generator auftreten. In Überlastfall lässt die als Rutschkupplung ausgebildete Überlasteinheit bei Überschreiten eines Grenzdrehmomentes einen gewissen, überlastabwerfenden Schlupf zu. Im Übrigen sind solche Rutschkupplungen - abgesehen vom überlastabwerfenden Schlupf - lasthaltend.

Solche Rutschkupplungen können beispielsweise als zwei gegeneinander verspannte und durch Reibschluss kraftübertragend gekoppelte Scheiben oder als Kegelpressverband ausgestaltet sein. Das Sollgrenzdrehmoment wird auf einem Prüfstand für Einbau der Kupplung in eine Windkraftanlage eingestellt. In der Anlage selbst ist das eingestellte Drehmoment nicht mehr nachzuprüfen.

Als nachteilig hat sich erwiesen, dass Verschleiß, Korrosion und / oder Ermüdung von Komponenten der Überlasteinheit zumindest schleichend zu einer für den Betreiber nicht erkennbaren Veränderung, insbesondere Verminderung des eingestellten Sollgrenzdrehmomentes führen kann. Infolge dessen spricht eine solche Überlasteinheit früher als notwendig auf Drehmomenterhöhungen an. Es kommt folglich zu einer Differenz zwischen dem Sollgrenzdrehmoment und dem tatsächlichen Grenzdrehmoment der Überlasteinheit, was am Beispiel einer Windkraftanlage zu einer geringeren Leistungsausbeute führt.

Zudem sind die als Überlasteinheit verwendeten Rutschkupplungen im Bereich des Reibschlusses von Änderungen der tribologischen Verhältnisse abhängig, woraus eine Streuung des Reibwertes resultiert und in der Konsequenz zu einer Streuung des tatsächlich auslösenden Grenzdrehmomentes führt. Aufgrund dieser Streuung wird das auslösende Rutschmoment mit einem Sicherheitszuschlag auf das Nennmoment ausgelegt, der in der Regel 1,5 beträgt. Die zu schützenden Komponenten sind unter Berücksichtigung des Zuschlags ausgelegt. Auf diese Weise ist gewährleistet, dass die auch zu einer Erhöhung des tatsächlichen Grenzdrehmomentes führenden tribologischen Verhältnisse im Bereich des Reibschlusses nicht zu einer Schädigung beispielsweise des Getriebes führen. In der Folge bedeutet dies jedoch einen erhöhten Aufwand und somit höhere Kosten auf Seiten des Getriebeherstellers. Zusammenfassend weisen die im Stand der Technik verwendeten Rutschkupplungen sich ändernde tatsächliche Grenzdrehmomente auf, die vom Sollgrenzdrehmoment abweichen.

Eine Windkraftanlage ist beispielsweise in DE 29 229 72 C2 beschrieben.

DE 20 2004 007 989 offenbart eine gattungsgemäße Windkraftanlage mit einer Wellenkupplung zur Verbindung eines Rotors der Windkraftanlage mit einem Generator und zur Drehmomentübertragung von einem von dem Rotor gebildeten Antrieb an einen von dem Generator gebildeten Abtrieb, mit einer Überlasteinheit in Form einer Rutschkupplung, deren antriebsseitiges Koppelteil mit dem abtriebsseitigen Koppelteil reibschlüssig verbunden ist, und deren Sollgrenzdrehmoment, bis zu welchem eine Kraftübertragung von Antrieb zu Abtrieb stattfindet, einstellbar ist, und mit einem Spannelement, welches das anund abtriebsseitige Koppelelement unter Definition eines überlastabwerfenden Grenzdrehmomentes gegeneinander presst, wobei der Reibschluss, der das Grenzdrehmoment zwischen den Koppelteilen beeinflusst, im Zeitverlauf Änderungen unterliegt, wobei das Spannelement im Maschinenbetrieb regulierbar ist und eine Regeleinheit vorgesehen ist, welche mittels Regulierung der vom Spannelement auf die Koppelteile aufgebrachten Kraft oder des vom Spannelement auf die Koppelteile aufgebrachten Drucks im laufenden Betrieb ein Grenzdrehmoment zwischen den Koppelteilen gewährleistet.

US 4,903,804 offenbart eine Wellenkupplung, mit einer Überlasteinheit in Form einer Rutschkupplung, deren antriebsseitiges Koppelteil mit dem abtriebsseitigen Koppelteil reibschlüssig verbunden ist, und deren Sollgrenzdrehmoment, bis zu welchem eine Kraftübertragung von Antrieb zu Abtrieb stattfindet, einstellbar ist, und mit einem Spannelement, welches das an- und abtriebsseitige Koppelelement unter Definition eines überlastabwerfenden Grenzdrehmomentes gegeneinander presst, wobei der Reibschluss, der das Grenzdrehmoment zwischen den Koppelteilen beeinflusst, im Zeitverlauf Änderungen unterliegt, wobei eine Messeinrichtung das Betriebsdrehmoment erfasst, wobei das Spannelement im Maschinenbetrieb regulierbar ist und wobei eine Regeleinheit vorgesehen ist, welche mittels Regulierung der vom Spannelement auf die Koppelteile aufgebrachten Kraft oder des vom Spannelement auf die Koppelteile aufgebrachten Drucks im laufenden Betrieb ein im wesentlichen konstantes, dem Sollgrenzdrehmoment entsprechendes Grenzdrehmoment zwischen den Koppelteilen gewährleistet.

J Die hier am Beispiel einer Windkraftanlage geschilderten Probleme der im Maschinenbau gängigen Überlasteinheiten in Form von Rutschkupplungen treffen auch auf deren Verwendung in sonstigen Anlagen und Maschinen zu. Insbesondere sind solche Baugruppen zu nennen, bei denen ein elektromotorischer Antrieb mit einem Getriebe gekoppelt ist. Beispielhaft genannt seien Bahnantriebe, Förderanlagen, Mühlen, sowie die Hütten- und Walzwerktechnik.

Aufgabe der Erfindung ist es, vor dem Hintergrund der beschriebenen Nachteile von Überlasteinheiten aus dem Stand der Technik, eine solche zu schaffen, deren Grenzdrehmoment exakter einstellbar ist.

Gelöst wird die Aufgabe zunächst von einer Kupplung mit den Merkmalen des Anspruches 1.

Der wesentliche Vorteil der Erfindung ist darin zu sehen, dass die Überlasteinheit im laufenden Maschinen- bzw. Anlagenbetrieb bedarfsgerecht regulierbar ist, wodurch ein im Wesentlichen konstantes und gegenüber dem Stand der Technik reduziertes Sollgrenzdrehmoment zwischen den Koppelteilen des An- und Abtriebes gewährleistet werden kann. Das Erfassen des Betriebsdrehmomentes und der Eingangsdrehzahl sowie der Vergleich mit dem Sollgrenzmoment durch die Regeleinrichtung lässt Rückschlüsse auf den jeweiligen Betriebszustand der Überlasteinheit zu. Das tatsächliche auslösende Grenzdrehmoment kann durch Verschleiß oder sich ändernde tribologische Verhältnisse vom Sollgrenzmoment nach oben oder unten abweichen.

Erstes Beispielszenario: Bei einer konstanten Eingangsdrehzahl und einem geringem tatsächlichen Grenzdrehmoment kommt es zu einem Schlupf in der Überlasteinheit. Das Betriebsdrehmoment ist höher als das tatsächliche Grenzdrehmoment. Das tatsächliche Grenzdrehmoment wird angehoben, bis die Überlasteinheit schlupffrei arbeitet oder das Sollgrenzdrehmoment erreicht ist. Die Anlage arbeitet wieder nahezu im Drehmomentoptimum.

Zweites Szenario: Bei einer konstanten Eingangsdrehzahl übersteigt das Betriebsdrehmoment das Sollgrenzmoment. Das tatsächliche Grenzdrehmoment liegt über dem Sollgrenzdrehmoment. Die Regeleinrichtung wird infolge dessen durch Einwirken auf die Koppelteile das tatsächliche Grenzdrehmoment auf das Sollgrenzdrehmoment absenken. Durch eine fortlaufende Überwachung und Nachregulierung wird so ein in engen Grenzen konstantes Sollgrenzdrehmoment gewährleistet. Verschleiß und sich ändernde tribologische Verhältnisse werden so kompensiert. Die der Überlasteinheit nachgeschalteten Komponenten können auf ein exaktes Sollgrenzdrehmoment ausgelegt werden und können so günstiger produziert werden. Zusätzlich lässt sich ein verschleißbedingt absinkendes tatsächliches Grenzdrehmoment im Nutzungszeitraum der Anlage nachregulieren, so dass die Anlage über Ihre Nutzungsdauer im Drehmomentoptimum betrieben werden kann.

Bei einer besonders bevorzugten Ausführungsform ist vorgesehen, dass das Spannelement als linear wirkender Hydraulikzylinder ausgebildet ist. Der wesentliche Vorteil von Hydraulikzylindern ist, dass sich mittels dieser die Überlasteinheit und Einhaltung äußerst kurzer Reaktionszeiten auf das vorgegebene Grenzdrehmoment einstellen lässt.

Es ist jedoch auch denkbar, dass das Spannelement als Einheit von einem elektrischen oder hydraulischen Servoantrieb mit einem Stellaktor gebildet ist.

Es ist vorgesehen, dass ein Dehnungsmessstreifen das Betriebsdrehmoment erfasst. Dehnungsmessstreifen haben sich für solche Zwecke im Stand der Technik als ausgesprochen vorteilhaft und zuverlässig herausgestellt. Alternativ bieten sich Torsionsstäbe, Beschleunigungssensoren, Piezzodrucksensoren oder ähnliche Einrichtungen an.

Zusätzlich ist es denkbar, dass ein Drehwinkelgeber vorgesehen ist, der die Stellung der Koppelteile zueinander erfasst und an die Regeleinheit weitergibt. Hiermit ließe sich ein Schlupf zwischen den Koppelteilen der Überlasteinheit feststellen, was im Zweifel auf ein zu geringes tatsächliches Grenzdrehmoment hinweist.

Die Überlasteinheit kann als Kegelpressverband ausgebildet sein oder sich dadurch kennzeichnen, dass die Überlasteinheit von einem mit Reibscheibe versehenen Gegenring gebildet ist, gegen den ein von einer Tellerfeder beaufschlagter Druckring gepresst ist. Auch ein hydraulischer Spannsatz bietet sich an.

Bei der bevorzugten Verwendung von Hydraulikzylindern ist es vorteilhaft, wenn ein erster Druckspeicher vorgesehen ist, welcher - gesteuert durch ein Ventil - den Hydraulikzylinder mit Hydraulikflüssigkeit beaufschlagt, um das Grenzdrehmoment zu erhöhen. Durch das Vorhalten eines entsprechenden Drucks in einem Druckspeicher lässt sich die Reaktionszeit des Regelkreises wesentlich verkürzen.

Bei der Verwendung von Hydraulikzylindern ist weiterhin vorgesehen, dass ein zweiter Druckspeicher vorgesehen ist, welcher - gesteuert durch ein Ventil - Hydraulikflüssigkeit aus dem Hydraulikzylinder aufnimmt, um das tatsächliche Grenzdrehmoment zu vermindern, wobei der Hydraulikkreislauf sinnvollerweise dadurch ergänzt wird, dass eine Pumpe vorgesehen ist, welcher zur Aufrechterhaltung einer Druckdifferenz zwischen den Druckspeichern Hydraulikflüssigkeit vom zweiten in den ersten Druckspeicher fördert.

Insofern kennzeichnet sich eine besonders bevorzugte Ausführungsform dadurch, dass die Regeleinheit mittels der Steuerung des Ventils bzw. der Pumpe das tatsächliche Grenzdrehmoment in Abhängigkeit der Betriebsparameter auf das Sollgrenzdrehmoment einstellt.

Schließlich wird die Aufgabe der Erfindung auch durch ein Verfahren gemäß Anspruch 12 gelöst.

Der wesentliche Vorteil dieses Verfahrens ist darin zu sehen, dass dieses es gestattet, das tatsächliche Grenzdrehmoment der Überlasteinheit einer Kupplung aktiv während des Maschinen- oder Anlagenbetriebs nachzuregulieren und somit unabhängig von Verschleiß und tribologischen Verhältnissen in gegenüber dem Stand der Technik sehr viel engeren Grenzen konstant zu halten.

Es ist vorgesehen, dass eine über einen vorgegebenen Zeitverlauf mehrfach erfolgte Nachregulierung zu einer dauerhaften Anpassung der das Sollgrenzdrehmoment definierenden Parameter durch die Regeleinheit führt.

Diese Verfahrensschritte erlauben es, einen möglichen Verschleiß der Überlasteinheit, der zu einem bei vorgegebenen Parametern dauerhaft zu einem zu niedrigen tatsächlichen Grenzdrehmoment führt, festzustellen, und durch eine Neubestimmung der Parameter dauerhaft nachzuregulieren.

Weitere Vorteile der Erfindung sowie ein besseres Verständnis ergeben sich aus der nachfolgenden Beschreibung bevorzugter Ausführungsformen anhand der Figuren. Es zeigen:
- Fig. 1: eine gattungsgemäße Kupplung aus dem Stand der Technik in einer ersten Ausführungsform,
- Fig. 2: eine gattungsgemäße Kupplung aus dem Stand der Technik in einer zweiten Ausführungsform,
- Fig. 3: die schematische Darstellung einer erfindungsgemäßen Kupplung,

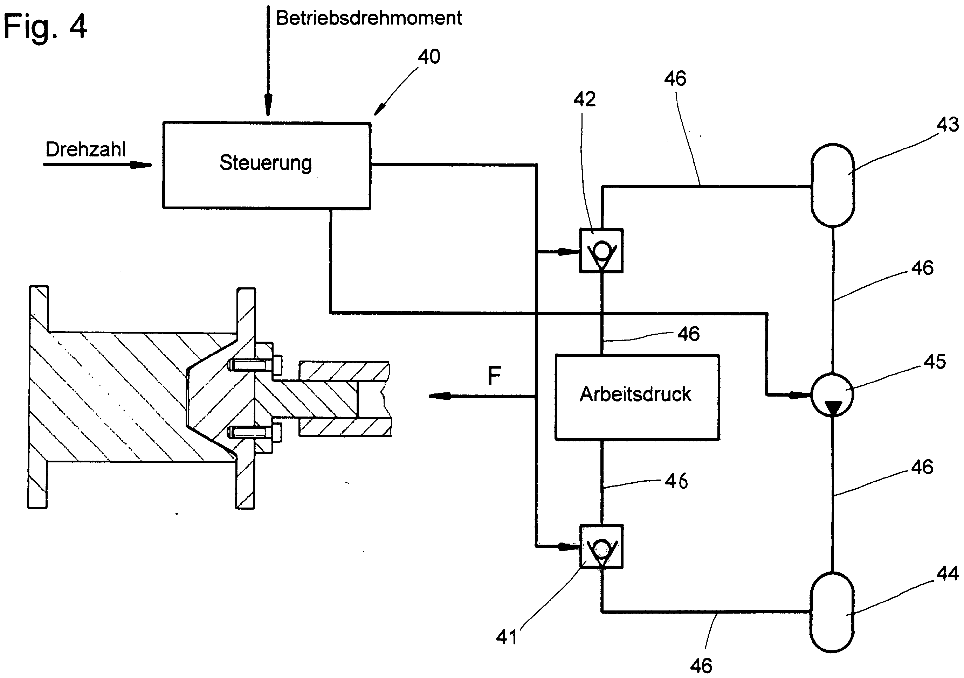

- Fig. 4: die Darstellung der Steuerung einer erfindungsgemäßen Kupplung anhand eines Blockschaltdiagramms.

Eine Kupplung ist in den nachfolgenden Figuren insgesamt mit der Bezugsziffer 10 versehen.

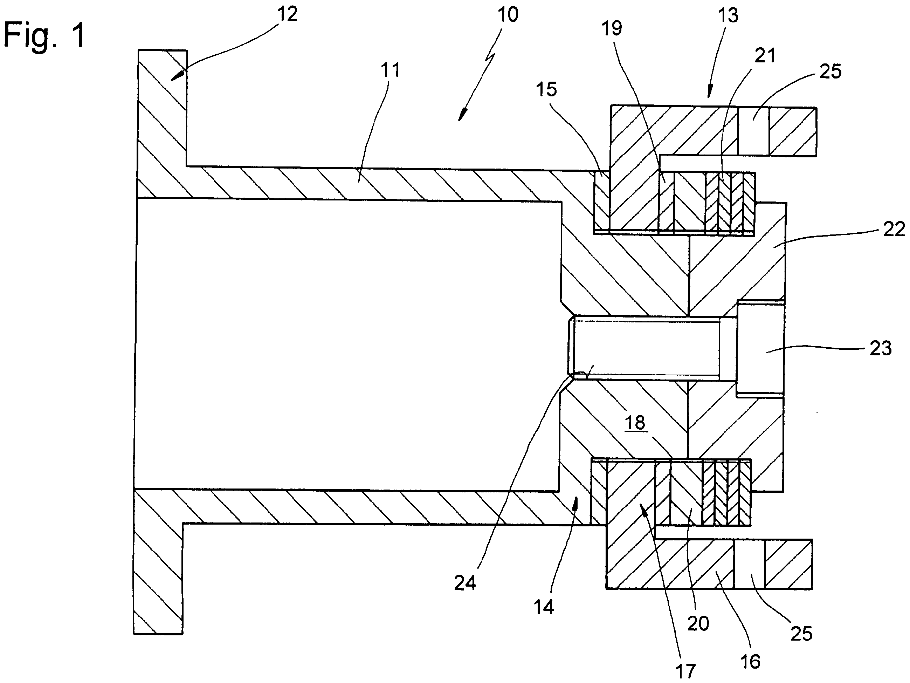

In Fig. 1 ist die Kupplung 10 aus dem Stand der Technik in einer ersten Ausführungsform dargestellt. Es handelt sich um eine Wellenkupplung 10, deren Welle 11 einenends mit einem Befestigungsflansch 12 zur Befestigung eines Antriebs, beispielsweise dem Rotor einer Windkraftanlage, versehen ist. Anderenends weist die Kupplung 10 eine insgesamt mit der Bezugsziffer 13 versehene Überlasteinheit auf. Die Überlasteinheit 13 umfasst zunächst eine einstückig-stoffschlüssig an der Welle 11 angeordnete Ringscheibe 14, auf welcher reibschlusserhöhende Mittel, hier in Form einer ersten Reibscheibe 15, aufgebracht sind. Die Ringscheibe 14 ist anspruchsgemäß das erste Koppelteil der Überlasteinheit 13. Das zweite Koppelteil der Überlasteinheit 13 wird durch eine Hohlwelle 16 mit einem nach innen weisenden Ringflansch 17 gebildet.

Die Hohlwelle 16 ist bis zur Anlage ihres Ringflansches 17 an der Ringscheibe 14 auf die Wellennabe 18 aufgeschoben. Ein mit einer zweiten Reibscheibe 19 versehener Druckring 20 nimmt den Ringflansch 17 der Hohlwelle 16 zwischen sich und der Ringscheibe 14 der Welle 11 auf. Ein Paket Tellerfedern 21 wird von einer Spannscheibe 22 gegen den Druckring 20 gehalten, wobei die Spannscheibe 22 mittels eines Schraubbolzens 23, der in eine nabenseitige Bohrung 24 eingreift, gehalten ist. Der Druckring 20 greift formschlüssig in die Nabe 18 ein.

Mittels des Schraubbolzens 23 und der Spannscheibe 22 lässt sich die auf den Druckring 20 wirkende Federspannung der Tellerfedern 21 einstellen. Der Druckring 20 presst den Ringflansch 17 der Hohlwelle 16 reibschlüssig gegen die Ringscheibe 14 der Welle 11. Durch die so hergestellte Haftreibung zwischen der Hohlwelle 16 und der Welle 11 lässt sich ein Drehmoment vom nicht dargestellten Antrieb auf einen in Befestigungsbohrungen 25 der Hohlwelle 16 eingreifenden Abtrieb übertragen. Durch die über die Tellerfedern 21 aufgebrachte Federspannung lässt sich das Sollgrenzdrehmoment der Überlasteinheit 13 einstellen, bis zu welchem die Kraftübertragung stattfindet. Bei einem das Sollgrenzdrehmoment überschreitendem Drehmoment ist die Haftreibung zur höheren Kraftübertragung nicht mehr ausreichend, die Koppelteile der Kupplung 10 rutschen aneinander ab.

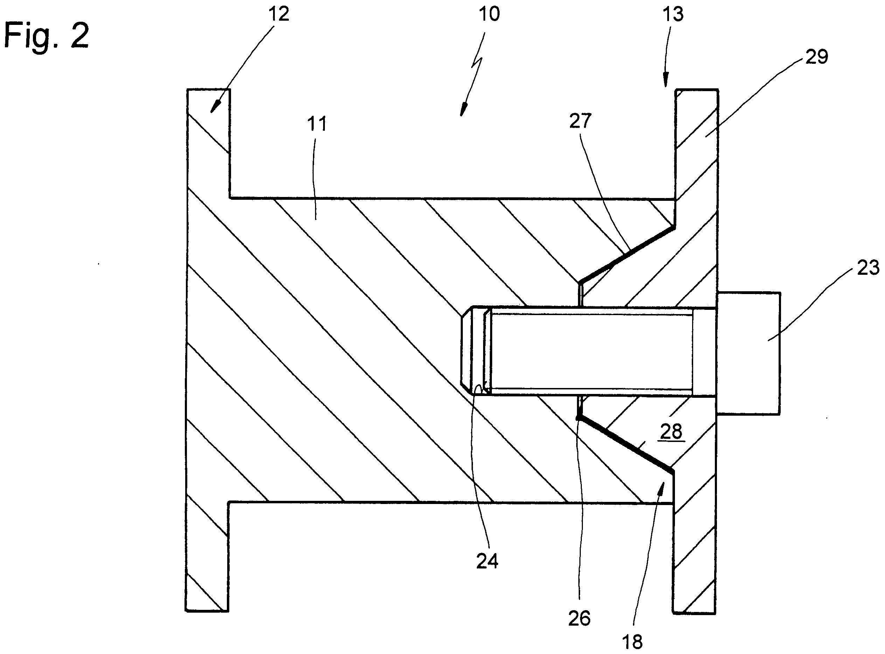

In Fig. 2 ist schematisch eine weitere aus dem Stand der Technik bekannte Kupplung 10 mit Überlasteinheit 13 dargestellt. Auch hier umfasst die Kupplung 10 zunächst einen Befestigungsflansch 12 sowie eine Welle 11. An dem dem Befestigungsflansch 12 gegenüberliegenden Ende ist die Überlasteinheit 13 angeordnet.

Die Überlasteinheit 13 umfasst zunächst eine stirnseitig in die Wellennabe 18 eingebrachte, kegelartige Ausnehmung 26, in deren Boden eine Bohrung 24 eingebracht ist. Die Umfangsflächen der kegelartigen Ausnehmung 26 sind mit reibschlusserhöhenden Mitteln 27 versehen. Die Ausnehmung 26 kann als erstes Koppelteil der Kupplung 10, nämlich als das antriebsseitige Koppelteil, bezeichnet werden. Es ist auch eine Funktionstrennung von Kegelfläche und Reibschlussfläche möglich.

Ein mit einem kegelartigen Konus 28 versehener Flansch 29 dient der Anbindung des Abtriebs und kann somit als zweites, abtriebsseitiges Koppelteil der Kupplung 10 angesehen werden. Der Flansch 29 ist mit einer zentralen, den Konus 28 entlang seiner Längsachse durchbrechenden Bohrung versehen, die einen Schraubbolzen 23 aufnimmt.

Der Abtriebsflansch 29 wird mit ihrem kegelartigen, komplementär zur Ausnehmung 26 ausgebildeten Konus 28 voran auf die Wellennabe 18 aufgesetzt. Der Konus 28 wird von der Ausnehmung 26 aufgenommen, seine Umfangsflächen werden mittels des in die Bohrung 24 eingreifenden Schraubbolzens 23 gegen die mit Reibschluss erhöhenden Mitteln 27 versehenen Innenumfangsflächen der Ausnehmung 26 verpresst. Es ist vorteilhaft, wenn der Schraubbolzen 23 über nicht dargestellte Tellerfederpakete auf den Flansch 29 wirkt. Über das Anzugsmoment des Schraubbolzens 23 wird das Sollgrenzdrehmoment der Überlasteinheit 13 eingestellt, bis zu welchem eine Kraftübertragung vom Antrieb zum Abtrieb stattfindet. Bei Überschreiten dieses Sollgrenzdrehmomentes kommt es zu einem Schlupf in der Überlasteinheit. Insofern handelt es sich bei den vorgestellten Rutschkupplungen um lasthaltende, jedoch überlastabwerfende Einheiten.

Der wesentliche Nachteil im Stand der Technik gemäß den Figuren 1 und 2 liegt insbesondere darin, dass das eingestellte Sollgrenzdrehmoment insbesondere aufgrund der schwankenden tribologischen Verhältnisse im Bereich der Trennfuge der beiden Koppelteile oder durch Verschleiß einer nicht unerheblichen Streuung unterworfen ist. Bei der Auslegung der Anlagenkomponenten muss diese Streuung berücksichtigt werden, was insbesondere bei den abtriebsseitig der Kupplung angeordneten Aggregaten zu einer entsprechend verstärkten Konstruktion und höheren Kosten führt. Im Bereich der Windkraftanlagen betrifft dies insbesondere die antriebsseitig der Kupplung angeordneten Getriebe, welche die relativ langsame Rotordrehung in eine vergleichsweise schnelle Rotationsbewegung zum Antreiben des Generators umsetzen.

In Abhängigkeit vom Nutzzeitraum der Anlage und den Einsatzbedingungen verändert sich das eingestellte Grenzdrehmoment auch durch Alterungserscheinungen und insbesondere durch Verschleiß der Reibbeläge. Dies führt in aller Regel zu einem tendenziellen Absenken des tatsächlich auslösenden Grenzdrehmomentes und zu einem Leistungsverlust beispielsweise einer Windkraftanlage im Zeitverlauf. Diesen potentiellen Nachteilen im Stand der Technik begegnet die Erfindung.

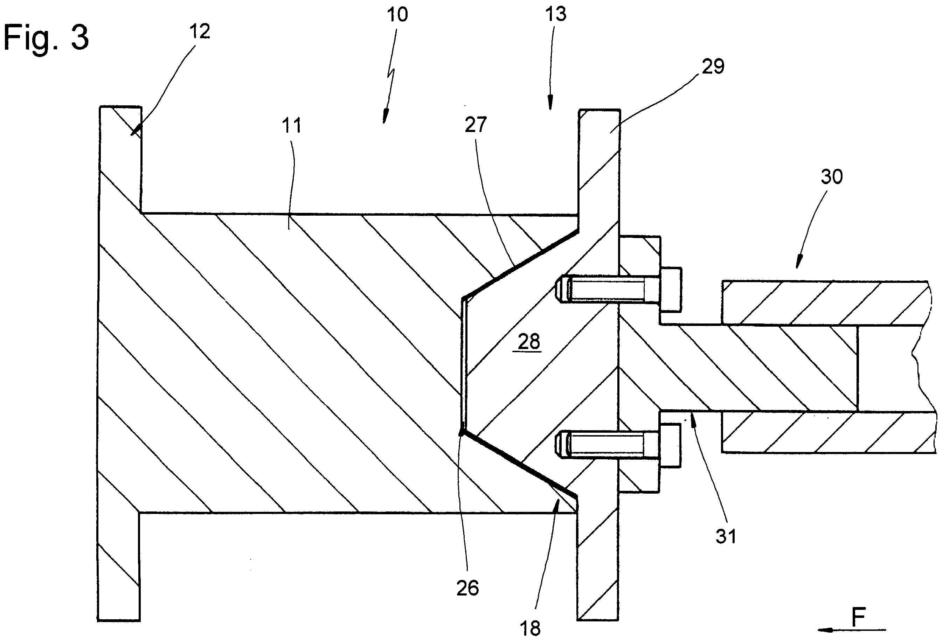

Die Erfindung ist schematisch in Fig. 3 dargestellt. Die dortige Kupplung 10 entspricht im Wesentlichen derjenigen der Fig. 2, weshalb für identische bzw. gleich wirkende Bauteile gleiche Bezugsziffern verwendet wurden.

Im Unterschied zu Fig. 2 wird die Schwungscheibe 29 nicht vermittels eines Schraubbolzens 23 gegen die Wellennabe 28 verspannt. Stattdessen ist eine Hydraulikzylinder 30 vorgesehen, dessen Hydraulikstempel 31 auf die Stirnseite der Schwungscheibe 29 wirkt und diese unter Wahrung des Sollgrenzdrehmomentes mit einer entsprechenden Kraft beaufschlagt. Infolgedessen wird der Konus 28 in die komplementäre Ausnehmung 26 gepresst, was zu einer reibschlüssigen, Kraft übertragenden Verbindung von An- und Abtrieb führt.

Der wesentliche Vorteil des Einsatzes eines Hydraulikzylinders, der in alternativer Ausführungsform auch durch einen Servoantrieb mit geeignetem Aktor ersetzt sein kann, liegt darin, dass der beide Koppelteile der Überlasteinheit 13 reibschlüssig verbindende Druck bzw. die vom Hydraulikzylinder aufgebrachte Kraft im laufenden Betrieb variiert werden kann. Infolge dessen ist das Grenzdrehmoment nicht statisch eingestellt - wie im Stand der Technik - sondern lässt sich in Abhängigkeit von den Betriebsparametern dynamisch anpassen. Erfindungsgemäß soll das Grenzdrehmoment im Wesentlichen in einem engen Bereich konstant gehalten werden, der dem Sollgrenzmoment entspricht bzw. diesem möglichst nahekommt. Durch die Anpassung des auf die Koppelteile wirkenden Drucks kann auf Verschleiß und insbesondere die Änderung der tribologischen Verhältnisse in der Trennfuge reagiert werden kann. Entsprechend kann auch eine Überlasteinheit 13 gemäß Fig. 1 mit einem Hydraulikzylinder versehen werden.

Eine mögliche Steuerung des Hydraulikzylinders ist im Blockschaltdiagramm der Fig. 5 dargestellt.

Eine Regeleinheit 40 überwacht laufend die Eingangsdrehzahl sowie das Betriebsdrehmoment. Das Betriebsdrehmoment wird mit dem zur Überlastsicherung vorgesehenen Grenzdrehmoment kontinuierlich abgeglichen. Die Drehzahl wird zur Plausibilitätskontrolle und zur Erfassung des Rutschvorgangs in der Überlasteinheit 13 einbezogen.

Neben der Regeleinheit 40 besteht der Regelkreis aus einem durch die Regeleinheit 40 steuerbaren Eingangsventil 41 des Hydraulikzylinders 30, einem ebenfalls von der Regeleinheit steuerbaren Ausgangsventil 42 des Hydraulikzylinders 30, einem ersten (Unter-) Druckspeicher 43, einem zweiten (Über-) Druckspeicher 44 sowie einer zwischen beiden Druckspeichern 43, 44 angeordneten Förderpumpe 45.

Über Hydraulikleitungen 46 gelangt Hydraulikflüssigkeit vom Überdruckspeicher 44 über das Eingangsventil in den Hydraulikzylinder und kann von dort aus über das Ausgangsventil 42 in den Unterdruckspeicher 43 geleitet werden. Vom Unterdruckspeicher 43 wird es mittels der Förderpumpe in den Überdruckspeicher 44 zurückgefördert.

Über Messeinrichtungen wird die Eingangsdrehzahl erfasst, die auch Rückschlüsse auf das Eingangsdrehmoment zulässt. Erfasst werden zudem das Betriebsdrehmoment und der Betriebszustand der Überlasteinheit 13. Ist die Überlasteinheit 13 schlupffrei, wird das Drehmoment verlustfrei von Antrieb an den Abtrieb weitergegeben. Besteht Schlupf in der Überlasteinheit 13, liegt entweder ein tatsächliches Grenzdrehmoment an, welches unterhalb des Sollgrenzdrehmomentes liegt, oder es besteht eine Überlastsituation. Welcher Betriebszustand vorliegt, ergibt beispielsweise ein Vergleich von Betriebsmoment und dem vorgegebenen Sollgrenzdrehmoment.

Zur Feststellung des Schlupfes in der Überlasteinheit 13 kann ein Drehzahl- oder Drehmomentvergleich zwischen An- und Abtrieb oder ein Drehwinkelgeber genutzt werden.

Erstes Beispielsszenario für einen Steuereingriff:
Aufgrund von Änderungen der tribologischen Verhältnisse im Bereich der Trennfuge bei zulässigem Drehmoment kommt es zu Schlupf zwischen den Koppelteilen der Überlasteinheit 13. Infolge dessen registriert die Regeleinheit 40 ein verringertes tatsächliches Grenzdrehmoment und öffnet das Einlassventil 41 des Hydraulikzylinders 30, um den anstehenden Druck zu erhöhen. Der Kraftschluss in der Überlasteinheit wird wiederhergestellt, das zulässige Betriebsdrehmoment wird wieder verlustfrei übertragen, die Anlage läuft wieder im situativ möglichen Optimum.

Zweites Beispiel für einen Steuereingriff:
Rückkopplungen aus dem Leitungsnetz führen zur einer unzulässigen Steigerung des Betriebsdrehmomentes über das Sollgrenzdrehmoment. Die Überlasteinheit 13 spricht bei dem anstehenden Hydraulikdruck F nicht an. Die Regeleinheit öffnet das Ausgangsventil 42 des Hydraulikzylinders 30 und verringert den anstehenden Druck. Die Hydraulikflüssigkeit wird im Unterdruckspeicher 43 gesammelt. Der Reibschluss in der Überlasteinheit verringert sich, die Überlasteinheit spricht an und das Betriebsdrehmoment sinkt aufgrund des Schlupfes zwischen den Koppelteilen wieder unter das Sollgrenzdrehmoment.

Die vorgenannten Regelbeispiele zeigen Szenarien, in denen die erfindungsgemäße Kupplung das sich aufgrund äußerer Einflüsse verändernde Grenzdrehmoment im Bereich der Überlasteinheit 13 zum Schutz und zum optimalen Betrieb der Anlage in engen Grenzen reguliert.

Die Beispiele zeigen auch, dass die Regelung einen Betrieb nahe dem Sollgrenzmoment und somit einen sehr effektiven Anlagenbetrieb ermöglicht.

Der Hydraulikkreislauf sieht einen dem Ausgangsventil 42 nachgelagerten Unterdruckspeicher 43 vor, um einen möglichst schnellen Druckabfall im Hydraulikzylinder 30 realisieren zu können. Der Überdruckspeicher 44 ist vorgesehen, um einen möglichst schnellen Druckaufbau im Hydraulikzylinder 30 realisieren zu können. Dies verbessert die Reaktionsgeschwindigkeit des Systems. Um Unterdruck und Überdruck konstant halten zu können, ist eine Förderpumpe 45 vorgesehen, welche die Hydraulikflüssigkeit vom Unterdruckspeicher 43 zurück in den Überdruckspeicher 44 verbringt.

Bei einer alternativen Ausführungsform ist die Überlasteinheit 13 nicht als Pressverband, sondern als hydraulischer Drehzylinder ausgebildet. Hydraulische Drehzylinder führen eine Rotations- anstelle einer Linearbewegung aus. An- und Abtrieb werden unmittelbar mit dem Drehzylinder gekoppelt, dessen Hydraulikdruck das Sollgrenzdrehmoment der Kraftübertragung festlegt. Werden höhere Kräfte in den Hydraulikzylinder eingeleitet, entweicht aus diesem Hydraulikflüssigkeit. Die Überlast wird folglich abgefangen, und das Betriebsdrehmoment steigt nicht über das eingestellte Sollgrenzmoment. Sobald sich die Anlage wieder im Normalbetrieb befindet, wird der Drehzylinder zurückgestellt.

Zusammenfassend wurde eine Kupplung 10 mit im Betrieb regelbarer Überlasteinheit 13 vorgestellt, die es erlaubt, das Sollgrenzdrehmoment in einem gegenüber dem Stand der Technik sehr engen Streuungsbereich zu halten und die Anlage nahe des eingestellten Sollgrenzdrehmomentes zu betreiben. Dies ermöglicht es insbesondere abtriebsseitig der Kupplung 10 Aggregate vorzusehen, die aufgrund des genauer einhaltbaren Grenzdrehmomentes einfacher und somit kostengünstiger ausgebaut sein können. Zudem wird einem durch Verschleiß sinkenden tatsächlichen Grenzdrehmoment begegnet.

### Bezugszeichenliste:

- 10: Kupplung
- 11: Welle
- 12: Befestigungsflansch von 11
- 13: Überlasteinheit
- 14: Ringscheibe
- 15: erste Reibscheibe
- 16: Hohlwelle
- 17: Ringflansch von 16
- 18: Wellennabe
- 19: zweite Reibscheibe
- 20: Druckring
- 21: Tellerfeder
- 22: Spannscheibe
- 23: Schraubbolzen
- 24: Bohrung von 18
- 25: Befestigungsbohrung
- 26: kegelartige Ausnehmung
- 27: reibschlusserhöhende Mittel
- 28: kegelartiger Konus von 29
- 29: Abtriebsflansch
- 30: Hydraulikzylinder
- 31: Hydraulikstempel
- 40: Regeleinheit
- 41: Eingangsventil
- 42: Ausgangsventil
- 43: (Unter-)Druckspeicher
- 44: (Über-)Druckspeicher
- 45: Förderpumpe
- 46: Hydraulikleitungen

## Patentansprüche

1. a) Windkraftanlage mit einer Wellenkupplung (10) zur Verbindung eines Rotors der Windkraftanlage mit einem Generator und zur Drehmomentübertragung von einem von dem Rotor gebildeten Antrieb an einen von dem Generator gebildeten Abtrieb,
b) mit einer Überlasteinheit (13) in Form einer Rutschkupplung,
c) deren antriebsseitiges Koppelteil (14, 26) mit dem abtriebsseitigen Koppelteil (17, 28) reibschlüssig verbunden ist, und deren Sollgrenzdrehmoment, bis zu welchem eine Kraftübertragung von Antrieb zu Abtrieb stattfindet, einstellbar ist,
d) und mit einem Spannelement (31), welches das an- und abtriebsseitige Koppelelement (14, 26, 17, 28) unter Definition eines überlastabwerfenden Grenzdrehmomentes gegeneinander presst,
e) wobei der Reibschluss, der das Grenzdrehmoment zwischen den Koppelteilen beeinflusst, im Zeitverlauf Änderungen unterliegt,
f) wobei eine Messeinrichtung das Betriebsdrehmoment erfasst,
g) das Spannelement (31) im Maschinenbetrieb regulierbar ist
h) und eine Regeleinheit (40) vorgesehen ist, welche mittels Regulierung der vom Spannelement (31) auf die Koppelteile (14, 26, 17, 28) aufgebrachten Kraft oder des vom Spannelement (31) auf die Koppelteile (14, 26, 17, 28) aufgebrachten Drucks im laufenden Betrieb ein im wesentlichen konstantes, dem Sollgrenzdrehmoment entsprechendes Grenzdrehmoment zwischen den Koppelteilen (14, 26, 17, 28) gewährleistet.

2. Windkraftanlage nach Anspruch 1, **dadurch gekennzeichnet, dass** das Spannelement (31) als linear wirkender Hydraulikzylinder (30) ausgebildet ist.

3. Windkraftanlage nach Anspruch 1, **dadurch gekennzeichnet, dass** das Spannelement (31) als Einheit von einem elektrischen oder hydraulischen Servoantrieb mit einem Stellaktor gebildet ist.

4. Windkraftanlage nach einem der vorhergehenden Ansprüche, **dadurch gekennzeichnet, dass** ein Dehnungsmessstreifen das Betriebsdrehmoment erfasst.

5. Windkraftanlage einem der vorhergehenden Ansprüche, **dadurch gekennzeichnet, dass** ein Drehwinkelgeber vorgesehen ist, der die Stellung der Koppelteile (14, 26, 17, 28) zueinander erfasst und an die Regeleinheit (40) weitergibt.

6. Windkraftanlage nach Anspruch 1, **dadurch gekennzeichnet, dass** die Überlasteinheit (13) von einem Kegelpressverband oder hydraulischen Spannsatz gebildet ist.

7. Windkraftanlage nach Anspruch 1, **dadurch gekennzeichnet, dass** die Überlasteinheit (13) von einem mit Reibscheibe (15) versehenen Gegenring (14) gebildet ist, gegen den ein von einer Tellerfeder (21) beaufschlagter Druckring (20) gepresst ist.

8. Windkraftanlage nach Anspruch 2 oder 4, **dadurch gekennzeichnet, dass** ein erster Druckspeicher (44) vorgesehen ist, welcher - gesteuert durch ein Ventil (41) - den Hydraulikzylinder (30) mit Hydraulikflüssigkeit beaufschlagt, um das Grenzdrehmoment zu erhöhen.

9. Windkraftanlage nach Anspruch 8, **dadurch gekennzeichnet, dass** ein zweiter Druckspeicher (43) vorgesehen ist, welcher - gesteuert durch ein Ventil (42) - Hydraulikflüssigkeit aus dem Hydraulikzylinder (30) aufnimmt, um das Grenzdrehmoment zu vermindern.

10. Windkraftanlage nach Anspruch 9, **dadurch gekennzeichnet, dass** eine Pumpe (45) vorgesehen ist, welche zur Aufrechterhaltung einer Druckdifferenz zwischen den Druckspeichern (43, 44) Hydraulikflüssigkeit vom zweiten in den ersten Druckspeicher fördert.

11. Windkraftanlage nach einem der Ansprüche 8 bis 10, **dadurch gekennzeichnet, dass** die Regeleinheit (40) mittels der Steuerung des Ventils (41, 42) bzw. der Pumpe (45) das Grenzdrehmoment in Abhängigkeit der Betriebsparameter einstellt.

12. Verfahren zum Betreiben einer Windkraftanlage nach Anspruch 1 umfassend ein Verfahren zur Einstellung eines Grenzdrehmomentes einer aus zwei Koppelteilen (14, 26, 17, 28) bestehenden Überlasteinheit einer Rutschkupplung (10), **gekennzeichnet durch** die folgenden Verfahrensschritte:
a) Erfassen des Betriebsdrehmomentes und der Eingangsdrehzahl **durch** eine Messeinrichtung,
b) Erfassen des Reibschlusses in der Überlasteinheit **durch** eine Messeinrichtung,
c) Vergleich des Betriebsdrehmoments mit dem Sollgrenzdrehmoment,
entweder d) Absenken des tatsächlichen Grenzdrehmoments auf das Sollgrenzdrehmoment **durch** eine Regeleinheit bei Betriebsdrehmoment größer Sollgrenzdrehmoment,
oder e) Erhöhen des tatsächlichen Grenzdrehmoments bei Schlupf in der Überlasteinheit **durch** eine Regeleinheit bis zum Erreichen eines schlupffreien Betriebes oder bis Erreichen des Sollgrenzdrehmoments.

13. Verfahren nach Anspruch 12, **dadurch gekennzeichnet, dass** die Regeleinheit (40) mittels Ansteuern von Ventilen (41, 42) und einer Pumpe (45) einen Hydraulikzylinder (30) mit einem das Sollgrenzdrehmoment zwischen den Koppelteilen (14, 26, 17, 28) definierenden Druck (F) beaufschlagt.

14. Verfahren nach Anspruch 12, **dadurch gekennzeichnet, dass** die Regeleinheit mittels Ansteuern eines Servoantriebs oder über einen Stellaktor den Druck (F) auf ein Spannelement (31) zur Erreichung des Sollgrenzdrehmomentes zwischen den Koppelteilen (14, 26, 17, 28) einstellt.

15. Verfahren nach Anspruch 12, **dadurch gekennzeichnet, dass** eine über einen vorgegebenen Zeitverlauf mehrfach erfolgte Nachregulierung zu einer dauerhaften Anpassung der das Sollgrenzdrehmoment definierenden Parameter durch die Regeleinheit führt.

## Claims

1. a) Wind turbine with a shaft coupling (10) for connecting of a rotor of the wind turbine with a generator and for the transmission of torques from an input provided by the rotor to an output provided by the generator,
b) with an overload unit (13) in form of a slipping clutch,
c) the input-sided coupling element (14, 26) of which is connected via frictional engagement with the output-sided coupling element and the reference maximum torque of which, up to which a power transmission is effected from the input to the output, is adjustable,
d) and with a clamping element (31) which presses the input-sided and the output-sided coupling elements (14, 26, 17, 28) against each other under definition of an overload ejecting maximum torque,
e) in which the frictional engagement, which influences the maximum torque between the coupling elements is subject to changes in time course,
f) in which a measuring system detects the operation torque,
g) the clamping element (31) is adjustable during machine operation
h) and a control unit (40) is provided, which ensures an essentially constant maximum torque corresponding to the reference maximum torque between the coupling elements (14, 26, 17, 28) by means of regulation of the force exerted by the clamping element (31) onto the coupling elements (14, 26, 17, 28) or the pressure applied by the clamping element (31) to the coupling elements (14, 26, 17, 28) in the ongoing operation.

2. Wind turbine according to claim 1, **characterised in that** the clamping element (31) is constructed as a hydraulic cylinder which operates linearly.

3. Wind turbine according to claim 1, **characterised in that** the clamping element (31) is formed as a unit of an electric or hydraulic servo drive with an adjusting actuator.

4. Wind turbine according to one of the previous claims, **characterised in that** a strain gauge detects the operational torque.

5. Wind turbine according to one of the previous claims, **characterised in that** a rotation angle transducer is provided, which detects the relative position of the coupling elements (14, 26, 17, 28) to each other and forwards it to the control unit (40).

6. Wind turbine according to claim 1 and **characterised in that** the overload unit (13) is formed by a cone press fit assembly or by a hydraulic clamping set.

7. Wind turbine according to claim 1, **characterised in that** the overload unit (13) is formed by a counter ring (14) which is provided with a friction disc (15) and is pressed against a thrust ring (20) which is biased by a disc spring (21).

8. Wind turbine according to claim 2 or 4, **characterised in that** a first pressure accumulator (44) is provided, which - being operated by a valve (41) - charges the hydraulic cylinder (30) with hydraulic liquid to raise the maximum torque.

9. Wind turbine according to claim 8, **characterised in that** a second pressure accumulator (43) is provided, which - operated by a valve (42) - absorbs hydraulic liquid out .of the hydraulic cylinder (30) to reduce the maximum torque.

10. Wind turbine according to claim 9 **characterised in that** a pump (45) is provided which forwards hydraulic liquid from the second pressure accumulator to the first pressure accumulator to maintain a pressure difference between the pressure accumulators (43, 44).

11. Wind turbine according to one of the claims 8 to 10, **characterised in that** the control unit (40) regulates the maximum torque according to the operating parameters by means of regulation of the valve (41, 42) respectively of the pump (45).

12. Method to operate a wind turbine according to claim 1 comprising a method to adjust a maximum torque of an overload unit consisting of two coupling elements (14, 26, 17, 28) of a slipping clutch (10) **characterised by** the following steps:
a) detecting the operational torque and the input rotational speed by means of a measuring device,
b) detecting the frictional engagement in the overload unit by means of a measuring device,
c) comparing the operational torque with the required maximum torque,
either
d) lowering the real maximum torque to the reference maximum torque by means of a control unit when the operational torque is higher than reference maximum torque,
or
e) increasing the real maximum torque if slip is occuring in the overload unit by a control unit until a slip-free operation is reached or the reference maximum torque is reached.

13. Method according to claim 12, **characterised in that** the control unit (40) biases a hydraulic cylinder (30) with a pressure (F) which defines the reference maximum torque between the coupling elements (14, 26, 17, 28) by means of controlling of valves (42, 42) and a pump (45).

14. Method according to claim 12, **characterised in that** the control unit adjusts the pressure (F) onto a clamping element (31) to reach the reference maximum torque between the coupling elements (14, 26, 17, 28) by means of controlling of a servo drive or with an adjusting actuator.

15. Method according to claim 12, **characterised in that** an re-adjustment which has been effected several times within a predetermined time course leads to a permanent adjustment of the parameters which define the reference maximum torque by the control unit.

## Revendications

1. a) Éolienne avec un accouplement d'arbre (10) pour la combinaison d'un rotor de l'éolienne avec un générateur et pour la transmission de moment de rotation d'un entraînement constitué par le rotor à la sortie constitué par le générateur,
b) avec une unité de surcharge (13) de façon d'un accouplement à glissement,
c) le part d'embrayage côté entraînement (14, 26) de laquelle est connecté par friction avec le part d'embrayage côté sortie et le couple de limite d'objectif prévisionnel de laquelle et auquel une transmission d'énergie s'est effectuée d'entraînement à la sortie est ajustable,
d) et avec un élément de serrage (31) qui joindre le part d'embrayage côté entraînement et le part d'embrayage côté sortie (14, 26, 17, 28) par pressage sous définition d'un couple de limite qui déleste la surcharge,
e) au cours duquel la liaison de friction, qu'influence le couple de limite entre les parts d'embrayage, est soumis aux changements dans le cours de temps,
f) au cours duquel un équipement de mesurage détecte le couple d'opération,
g) l'élément de serrage (31) est ajustable au cours de l'opération
h) et une unité de contrôle (40) est prévue qui assure un couple de limite qui est essentiellement constant, conformément au couple de limite d'objectif prévisionnel entre les parts d'embrayage (14, 26, 17, 28) avec l'aide de régulation d'énergie recouru par l'élément de serrage (31) aux parts d'embrayage (14, 26, 17, 28) ou la pression recouru par l'élément de serrage (31) aux parts d'embrayage (14, 26, 17, 28) dans l'opération en cours.

2. Éolienne selon la revendication 1, **caractérisée en ce que** l'élément de serrage (31) est construit comme un cylindre d'hydraulique qui marche linéairement.

3. Éolienne selon la revendication 1, **caractérisée en ce que** l'élément de serrage (31) est constitué comme une unité d'une servocommande électrique ou hydraulique avec un actionneur d'ajustage.

4. Éolienne selon l'une des précédentes revendications, **caractérisée en ce qu'**une jauge de contrainte comprend le couple d'opération.

5. Éolienne selon l'une des précédentes revendications, **caractérisée en ce qu'**un transmetteur d'angle de rotation est prévu, qui détecte la position des parts d'embrayage (14, 26, 17, 28) réciproquement et qui la transmet à l'unité de contrôle (40).

6. Éolienne selon la revendication 1 et **caractérisée en ce que** l'unité de surcharge (13) est constituée par un joint de cône à ajustement serré ou bloque de serrage hydraulique.

7. Éolienne selon la revendication 1, **caractérisée en ce que** l'unité de surcharge (13) est constituée par une contre bague (14) qui est équipée avec un disque de friction (15) contre lequel une bague de serrage (20) est compactée qui est pressurisé par un plateau-ressort (21).

8. Éolienne selon la revendication 2 ou 4, **caractérisée en ce qu'**un accumulateur de pression (44) est prévu qui - commandé par une valvule (41) - pressurise le cylindre d'hydraulique (30) avec liquide de hydraulique pour élever le couple de limite.

9. Éolienne selon la revendication 8, **caractérisée en ce qu'**un deuxième accumulateur de pression (43) est prévu qui
- commandé par une valvule (42) - absorbe liquide de hydraulique en dehors du cylindre d'hydraulique (30) pour réduire le couple de limite,

10. Éolienne selon la revendication 9, **caractérisée en ce qu'**une pompe (45) est prévue qui transporte liquide de hydraulique du deuxième accumulateur de pression au premier accumulateur de pression pour maintenir une différence de pression entre les accumulateurs de pression (43, 44).

11. Éolienne selon l'une des revendications 8 a 10, **caractérisées en ce que** l'unité de contrôle (40) ajuste le couple de limite en fonction des paramètres d'opération avec l'aide d'ajustage de la valvule (41, 42) respectivement de la pompe (45).

12. Méthode pour exercer une éolienne selon la revendication 1 qui comprend une méthode d'ajustement d'un couple de limite d'une unité de surcharge, consistent en deux parts d'embrayage (14, 26, 17, 28) d'un accouplement à glissement (10) caractérisée avec les pas suivants:
a) détecter le couple d'opération et la vitesse d'entrée avec l'aide d'un équipement de mesurage,
b) détecter la liaison de friction, dans l'unité de surcharge avec l'aide d'un équipement de mesurage,
c) comparaison du couple d'opération avec le couple de limite d'objectif prévisionnel,
ou bien
d) diminuer le réel couple de limite au couple de limite d'objectif prévisionnel avec l'aide d'une unité de contrôle si le couple d'opération est plus haute que le couple de limite d'objectif prévisionnel,
ou bien
e) élever le réel couple de .limite, s'il y a un glissement dans l'unité de surcharge par une unité de contrôle jusqu'à une opération sans glissement est attendue ou le couple de limite d'objectif prévisionnel est attendu.

13. Méthode selon la revendication 12, **caractérisée en ce que** l'unité de contrôle (40) pressurise un cylindre d'hydraulique (30) avec une pression (F) qui définit le couple de limite d'objectif prévisionnel entre les parts d'embrayage (14, 26, 17, 28) avec l'aide du pilotage des valvules (42, 42) et une pompe (45).

14. Méthode selon la revendication 12, **caractérisée en ce que** l'unité de contrôle ajuste la pression (F) à un élément de serrage (31) pour atteindre le couple de limite d'objectif prévisionnel entre les parts d'embrayage (14, 26, 17, 28) avec l'aide du pilotage d'une servocommande ou avec un actionneur d'ajustage.

15. Méthode selon la revendication 12, **caractérisée en ce qu'**un ajustage après qui a été effectué plusieurs fois à un cours de temps prétendu mène à un ajustement permanent des paramètres qui définissent le couple de limite d'objectif prévisionnel par l'unité de contrôle.
